# EUROPÄISCHE PATENTSCHRIFT

(11) **EP 2 645 544 B1**
(45) Veröffentlichungstag und Bekanntmachung des Hinweises auf die Patenterteilung: **07.10.2020**
(21) Anmeldenummer: 12161812.8
(22) Anmeldetag: 28.03.2012
(51) Int. Cl.: H02K 9/08, H02K 9/19

(54) **Elektrische Maschine mit effizienter Innenkühlung**
Electric machine with efficient internal cooling
Machine électrique dotée d'un refroidissement interne efficace

(43) Veröffentlichungstag der Anmeldung: 02.10.2013
(73) Patentinhaber: Siemens Aktiengesellschaft, 80333 München (DE)
(72) Erfinder: Büttner, Klaus, 97618 Hollstadt (DE); Kirchner, Klaus, 97645 Ostheim (DE); Müller, Michael, 97688 Bad Kissingen (DE)

(56) Entgegenhaltungen:
- DE-A1- 19 905 539
- DE-A1-102007 043 385
- DE-B- 1 116 797
- DE-U- 1 802 282
- DE-U- 1 813 190

## Beschreibung

Die vorliegende Erfindung betrifft eine elektrische Maschine,
- wobei die elektrische Maschine eine Statoreinrichtung und einen Rotor aufweist,
- wobei der Rotor drehfest auf einer Rotorwelle angeordnet ist,
- wobei die Rotorwelle in Lagern der elektrischen Maschine gelagert ist, so dass die Rotorwelle einschließlich des Rotors um eine Rotationsachse drehbar ist,
- wobei auf die Statoreinrichtung axial beidseits Begrenzungselemente aufgesetzt sind, so dass die Statoreinrichtung und die Begrenzungselemente einen Rotorinnenraum radial außen und axial beidseits begrenzen,
- wobei in der Statoreinrichtung axial verlaufende erste Kühlkanäle angeordnet sind, die an ihren axialen Enden mit dem Rotorinnenraum kommunizierend verbunden sind, so dass mittels der ersten Kühlkanäle ein innerer Luftkühlkreislauf vom Rotorinnenraum durch die ersten Kühlkanäle hindurch in den Rotorinnenraum zurück vervollständigt wird,
- wobei der Statoreinrichtung ein flüssiges Kühlmedium zugeführt und sodann wieder aus der Statoreinrichtung abgeführt wird,
- wobei das flüssige Kühlmedium zumindest teilweise durch in der Statoreinrichtung angeordnete zweite Kühlkanäle geführt wird.

Derartige elektrische Maschinen sind allgemein bekannt. Rein beispielhaft wird auf die DE 10 2008 036 124 A1 und die korrespondierende US 2011/140 550 A1 oder die DE 11 16 797 B verwiesen.

Aus dem DE 18 13 190 U und aus dem DE 18 02 282 U sind weitere flüssigkeitsgekühlte elektrische Maschinen bekannt.

Aus der DE 199 05 539 A1 ist bekannt, eine elektrische Maschine als Hauptantrieb eines Kraftfahrzeugs zu verwenden.

Aus der DE 10 2007 043385 A1 ist eine elektrische Maschine gemäß dem Oberbegriff des Anspruchs 1 bekannt.

In elektrischen Maschinen treten im Betrieb Verluste auf, welche zu Wärmeentwicklung führen. Die entstehende Wärme muss aus der elektrischen Maschine abgeführt werden. Die Wärme entsteht teilweise in der Statoreinrichtung und teilweise im Rotor der elektrischen Maschine.

Die Kühlung der Statoreinrichtung ist in der Regel problemlos. Sie erfolgt alternativ mit Luft oder mit einem flüssigen Kühlmedium, beispielsweise mit Wasser. Bei elektrischen Maschinen mit relativ niedriger Schutzart ist zumeist auch die Abfuhr von Wärme aus dem Rotorinnenraum relativ problemlos.

Bei elektrischen Maschinen, die in relativ hoher Schutzart gekapselt sind - IP 55 oder besser -, ist eine direkte Kühlung des Rotorinnenraums mit Außenluft nicht möglich. Es wird daher ein innerer Kühlkreislauf geschaffen, in dem Luft zwischen dem Rotorinnenraum und der Statoreinrichtung zirkuliert. Über die Statoreinrichtung wird der Rotorinnenraum indirekt gekühlt.

Die Aufgabe der vorliegenden Erfindung besteht darin, zum einen eine effiziente Kühlung der elektrischen Maschine als Ganzes zu erreichen und zum anderen insbesondere die im Rotorinnenraum entstehende Wärme einem Kühlmedium zuzuführen, so dass die entsprechende Wärmeenergie anderweitig nutzbar ist.

Die Aufgabe wird durch eine elektrische Maschine mit den Merkmalen des Anspruchs 1 gelöst.

Vorteilhafte Ausgestaltungen der erfindungsgemäßen elektrischen Maschine sind Gegenstand der abhängigen Ansprüche 2 bis 11. Anspruch 12 nennt eine bevorzugte Verwendung der elektrischen Maschine. Die Ansprüche 13 und 14 nennen bevorzugte Verwendungsmöglichkeiten für die abgeführte Wärme.

Erfindungsgemäß ist vorgesehen, eine elektrische Maschine der eingangs genannten Art dadurch auszugestalten,
- dass die ersten Kühlkanäle und die zweiten Kühlkanäle durch Zwischenwände der Statoreinrichtung voneinander getrennt sind und die Zwischenwände an ihren den ersten Kühlkanälen zugewandten Seiten kühlrippenartige Primärvorsprünge aufweisen und
- dass die Primärvorsprünge ihrerseits an ihren den ersten Kühlkanälen zugewandten Seiten kühlrippenartige Sekundärvorsprünge aufweisen.

Durch diese Ausgestaltung kann der Wärmeübergang vom inneren Luftkühlkreislauf zum flüssigen Kühlmedium verbessert werden. In einer weiter bevorzugten Ausgestaltung der elektrischen Maschine ist weiterhin vorgesehen, dass die kühlrippenartigen Primärvorsprünge innen hohl ausgebildet sind und von dem flüssigen Kühlmedium durchflossen sind. Auch durch diese Ausgestaltung kann der Wärmeübergang vom inneren Luftkühlkreislauf zum flüssigen Kühlmedium verbessert werden. Dies gilt ganz besonders, wenn die von dem flüssigen Kühlmedium durchflossenen Teile der Primärvorsprünge Bestandteile der zweiten Kühlkanäle sind.

In einer bevorzugten Ausgestaltung der elektrischen Maschine sind in den ersten Kühlkanälen dritte Kühlkanäle angeordnet, die sich zumindest im Wesentlichen über die gesamte axiale Länge der ersten Kühlkanäle erstrecken, wobei das flüssige Kühlmedium auch durch die dritten Kühlkanäle geführt wird.

Falls die dritten Kühlkanäle vorhanden sind, sind vorzugsweise die zweiten und die dritten Kühlkanäle in Bezug auf den Fluss des flüssigen Kühlmediums voneinander verschiedene Kühlkanäle. In diesem Fall können insbesondere die zweiten und die dritten Kühlkanäle in Bezug auf den Fluss des flüssigen Kühlmediums alternativ einander parallel oder in Serie zueinander angeordnet sein.

Die dritten Kühlkanäle können als in den ersten Kühlkanälen angeordnete Rohre ausgebildet sein. Hierbei sind verschiedene Detailausgestaltungen möglich.

So ist es beispielsweise möglich, dass die in den ersten Kühlkanälen angeordneten Rohre einen ersten und einen zweiten Rohrabschnitt aufweisen, die in Fließrichtung des flüssigen Kühlmediums gesehen hintereinander angeordnet sind, der erste Rohrabschnitt axial verläuft und der zweite Rohrabschnitt spiralförmig um den ersten Rohrabschnitt herum verläuft.

Alternativ ist es möglich, dass die in den ersten Kühlkanälen angeordneten Rohre einen ersten und einen zweiten Rohrabschnitt aufweisen, die in Fließrichtung des flüssigen Kühlmediums gesehen hintereinander angeordnet sind, und der erste und der zweite Rohrabschnitt doppelhelixartig um eine zur Rotationsachse parallele Kanalachse umlaufen.

Wiederum alternativ ist es möglich, dass die in den ersten Kühlkanälen angeordneten Rohre axial verlaufen und an den Rohren Luftleitelemente angeordnet sind, so dass die Luft des inneren Luftkühlkreislaufes spiralförmig um die in den ersten Kühlkanälen angeordneten Rohre umläuft.

Die elektrische Maschine kann als gehäuselose elektrische Maschine ausgebildet sein. In der Regel weist die Statoreinrichtung jedoch einen Stator und ein Gehäuse auf, wobei das Gehäuse den Stator radial außen umgibt.

Die erfindungsgemäße elektrische Maschine kann insbesondere als Hauptantrieb eines Kraftfahrzeugs verwendet werden. In diesem Fall kann das aus dem Gehäuse abgeführte flüssige Kühlmedium beispielsweise innerhalb des Kraftfahrzeugs für Heizzwecke verwendet werden. Insbesondere kann das flüssige Kühlmedium zum Aufheizen eines elektrischen Energiespeichers des Kraftfahrzeugs und/oder zum Beheizen eines Fahrgastraums des Kraftfahrzeugs verwendet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine,
- FIG 2: einen Querschnitt durch die elektrische Maschine von FIG 1,
- FIG 3: einen Ausschnitt des Querschnitts durch die elektrische Maschine der FIG 1 und 2, diese Zeichnung stellt nicht die Erfindung dar und dient lediglich dem besseren Verständnis der Erfindung,
- FIG 4: die Erfindung,
- FIG 5: eine alternative Ausgestaltung von FIG 3,
- FIG 6: eine alternative Ausgestaltung von FIG 5,
- FIG 7 bis 9: mögliche Ausgestaltungen von Rohren und
- FIG 10: eine mögliche Verwendung der erfindungsgemäßen elektrischen Maschine.

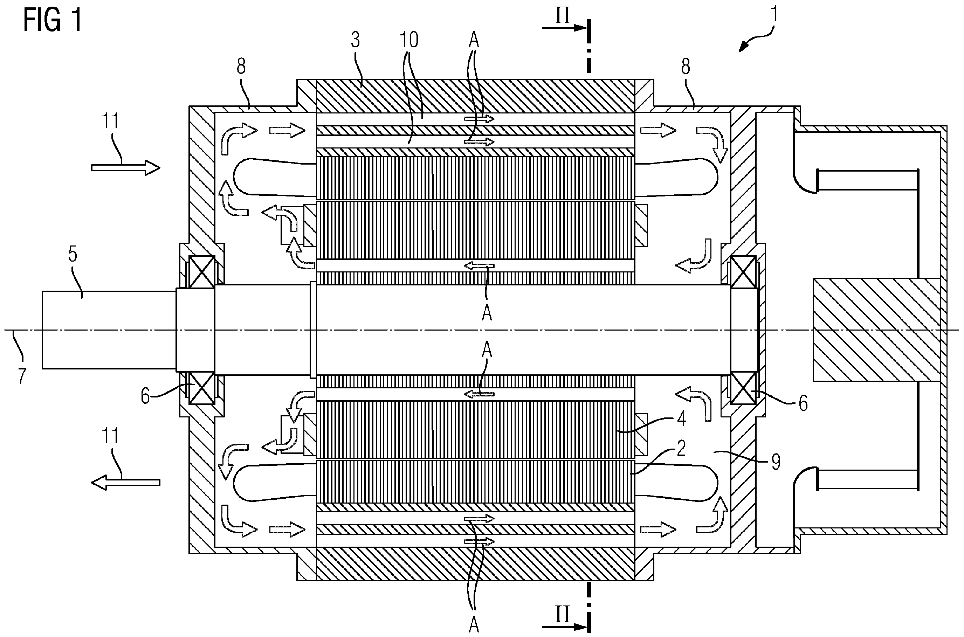

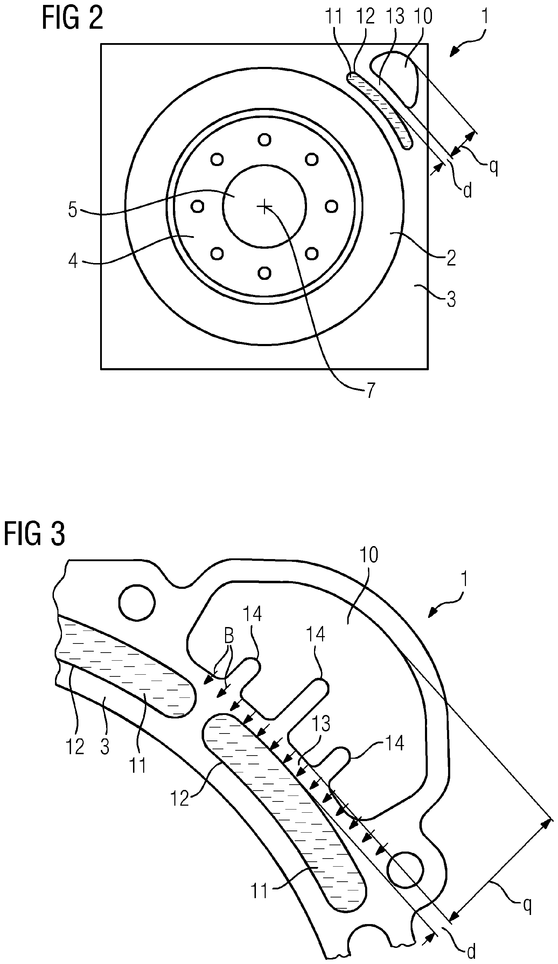

Gemäß den FIG 1 und 2 weist eine elektrische Maschine eine Statoreinrichtung 1 auf. Die Statoreinrichtung 1 umfasst zumindest einen Stator 2 der elektrischen Maschine. Gemäß den FIG 1 und 2 umfasst die Statoreinrichtung 1 weiterhin ein Gehäuse 3. Das Gehäuse 3 umgibt den Stator 2 radial außen, so dass der Stator 2 im Gehäuse 3 drehfest gehalten ist. Alternativ könnte das Gehäuse 3 entfallen. In diesem Fall wäre die elektrische Maschine als gehäuselose elektrische Maschine ausgebildet.

Die elektrische Maschine weist weiterhin einen Rotor 4 auf. Der Rotor 4 ist drehfest auf einer Rotorwelle 5 angeordnet. Die Rotorwelle 5 ist in Lagern 6 der elektrischen Maschine gelagert, so dass die Rotorwelle 5 einschließlich des Rotors 4 um eine Rotationsachse 7 drehbar ist.

Soweit nachfolgend der Begriff "axial" gebraucht wird, ist er stets auf die Rotationsachse 7 bezogen. "Axial" bedeutet eine Richtung parallel zur Rotationsachse 7. Soweit nachfolgend (und auch vorstehend) der Begriff "radial" benutzt wird, ist er ebenfalls auf die Rotationsachse 7 bezogen. Er bezeichnet eine Richtung orthogonal zur Rotationsachse 7 auf die Rotationsachse 7 zu bzw. von ihr weg. Soweit nachfolgend der Begriff "tangential" verwendet wird, ist er ebenfalls auf die Rotationsachse 7 bezogen. Er bezeichnet eine Richtung orthogonal zur Rotationsachse 7 und auch orthogonal zur Radialrichtung. Er bedeutet also eine Richtung, die in konstantem radialem Abstand und bei konstanter axialer Position kreisförmig um die Rotationsachse 7 herum gerichtet ist.

Auf die Statoreinrichtung 1 - im Falle des Vorhandenseins des Gehäuses 3 auf das Gehäuse 3 - sind axial beidseits Begrenzungselemente 8 aufgesetzt. Die Statoreinrichtung 1 und die Begrenzungselemente 8 begrenzen einen Rotorinnenraum 9 radial außen und axial beidseits in relativ hoher Schutzart, in der Regel in der Schutzart IP 55 oder besser.

In der Statoreinrichtung 1 - im Falle des Vorhandenseins des Gehäuses 3 im Gehäuse 3 - sind axial verlaufende erste Kühlkanäle 10 angeordnet. Die ersten Kühlkanäle 10 sind an ihren axialen Enden mit dem Rotorinnenraum 9 kommunizierend verbunden. Mittels der ersten Kühlkanäle 10 wird ein innerer Luftkühlkreislauf vervollständigt. Die in dem inneren Luftkühlkreislauf zirkulierende Luft ist in FIG 1 mit Pfeilen A angedeutet. Der innere Luftkühlkreislauf führt vom Rotorinnenraum 9 nach radial außen zu den einen axialen Enden der ersten Kühlkanäle 10, sodann durch die ersten Kühlkanäle 10 hindurch zu den anderen axialen Enden der ersten Kühlkanäle 10 und schließlich nach radial innen wieder zum Rotorinnenraum 9 zurück. Zum Erzwingen einer Zwangskonvektion kann - nicht aber muss - auf der Rotorwelle 5 innerhalb des Rotorinnenraums 9 ein Lüfterelement angeordnet sein.

Falls die Statoreinrichtung 1 einen im Wesentlichen quadratischen Querschnitt aufweist, sind die ersten Kühlkanäle 10 vorzugsweise im Bereich der Diagonalen des Querschnitts angeordnet. In FIG 2 ist dies für eine der Ecken dargestellt. Die Anordnung in den Ecken ist jedoch nicht zwingend erforderlich.

Der Statoreinrichtung 1 wird ein flüssiges Kühlmedium 11 - beispielsweise Wasser - zugeführt, das nach dem Durchströmen der Statoreinrichtung 1 wieder aus der Statoreinrichtung 1 abgeführt wird. Das flüssige Kühlmedium 11 wird zumindest teilweise durch zweite Kühlkanäle 12 geführt, die in der Statoreinrichtung 1 angeordnet sind. Die zweiten Kühlkanäle 12 sind vorzugsweise - aber nicht zwangsweise - im selben Element 2, 3 der Statoreinrichtung 1 angeordnet wie die ersten Kühlkanäle 10, also im Falle des Vorhandenseins des Gehäuses 3 bevorzugt im Gehäuse 3.

Soweit bisher beschrieben, entspricht die elektrische Maschine der FIG 1 und 2 - mit Ausnahme des Gehäuses 3 - der aus der DE 10 2008 036 124 A1 bekannten elektrischen Maschine.

Die zweiten Kühlkanäle 12 sind, wie bereits erwähnt, vorzugsweise im selben Element 2, 3 der Statoreinrichtung 1 angeordnet, insbesondere in der Nähe der ersten Kühlkanäle 10. In diesem Fall sind die ersten Kühlkanäle 10 und die zweiten Kühlkanäle 12 entsprechend der Darstellung in FIG 3 durch Zwischenwände 13 der Statoreinrichtung 1 voneinander getrennt. Die Zwischenwände 13 sind relativ dünnwandig. Ihre Wandstärke d sollte vorzugsweise maximal 20 % einer Quererstreckung q der ersten Kühlkanäle 10 betragen, wobei die Richtung der Quererstreckung q orthogonal zur jeweiligen Zwischenwand 13 verläuft.

Die Zwischenwände 13 weisen gemäß FIG 3 an ihren den ersten Kühlkanälen 10 zugewandten Seiten kühlrippenartige Primärvorsprünge 14 auf. Die kühlrippenartigen Primärvorsprünge 14 vergrößern die Kontaktoberfläche zur Luft des inneren Kühlkreislaufs. Durch diese Oberflächenvergrößerung wird der Wärmeübergang von der die ersten Kühlkanäle 10 durchströmenden Luft zu dem die zweiten Kühlkanäle 12 durchströmenden flüssigen Kühlmedium 11 erleichtert. Die Pfeile B in FIG 3 sollen den Wärmefluss von den ersten Kühlkanälen 10 zu den zweiten Kühlkanälen 12 veranschaulichen.

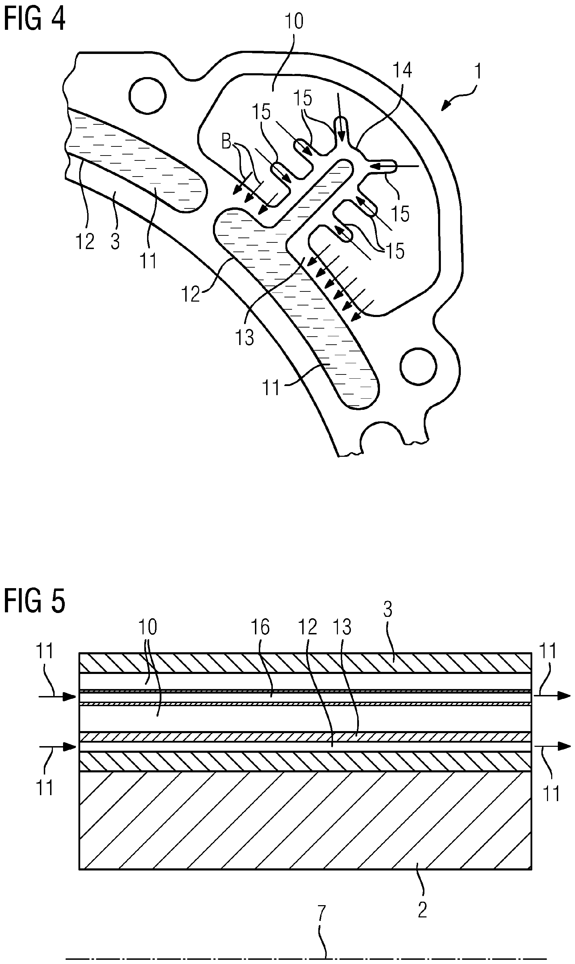

FIG 4 zeigt die Erfindung. Weiterhin sollen die Pfeile B auch in FIG 4 den Wärmefluss von den ersten Kühlkanälen 10 zu den zweiten Kühlkanälen 12 veranschaulichen.

Erfindungsgemäß weisen die Primärvorsprünge 14 an ihren den ersten Kühlkanälen 10 zugewandten Seiten kühlrippenartige Sekundärvorsprünge 15 auf. Dadurch wird der Wärmeübergang von den ersten Kühlkanälen 10 zu den zweiten Kühlkanälen 12 noch weiter optimiert. Eine zweite Ausgestaltung besteht darin, dass die kühlrippenartigen Primärvorsprünge 14 innen hohl ausgebildet sind. In diesem Fall werden die entsprechenden Hohlräume ebenfalls von dem flüssigen Kühlmedium 11 durchflossen.

Es ist entsprechend der Darstellung von FIG 4 möglich, dass die von dem flüssigen Kühlmedium 11 durchflossenen Teile der Primärvorsprünge 14 Bestandteile der zweiten Kühlkanäle 12 sind. Alternativ kann es sich um eigenständige Kühlkanäle handeln.

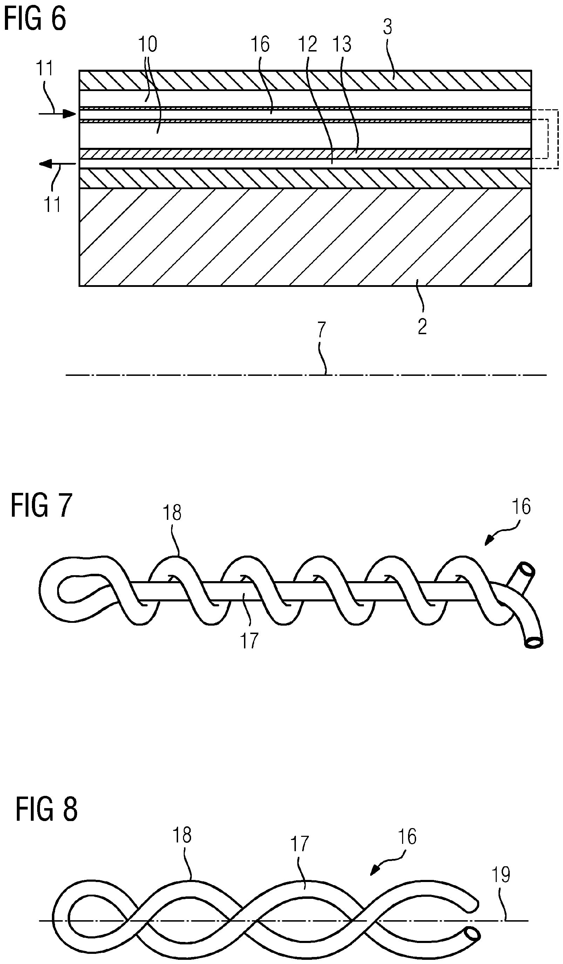

Alternativ oder zusätzlich zu den Ausgestaltungen der FIG 3 und 4 ist es gemäß den FIG 5 und 6 möglich, dass in den ersten Kühlkanälen 10 dritte Kühlkanäle 16 angeordnet sind, die sich - zumindest im Wesentlichen - über die gesamte axiale Länge der ersten Kühlkanäle 10 erstrecken. In diesem Fall wird das flüssige Kühlmedium 11 nicht nur durch die zweiten Kühlkanäle 12, sondern auch durch die dritten Kühlkanäle 16 geführt.

Die zweiten Kühlkanäle 12 und die dritten Kühlkanäle 16 sind entsprechend der Darstellung in den FIG 5 und 6 in Bezug auf den Fluss des flüssigen Kühlmediums 11 voneinander verschiedene Kühlkanäle 12, 16. In diesem Fall können die zweiten und dritten Kühlkanäle 12, 16 alternativ entsprechend der Darstellung in FIG 5 einander parallel oder entsprechend der Darstellung in FIG 6 in Serie zueinander angeordnet sein. Bei einer Anordnung in Serie fließt das flüssige Kühlmedium 11 vorzugsweise zuerst durch die dritten Kühlkanäle 16 und erst dann durch die zweiten Kühlkanäle 12.

Die dritten Kühlkanäle 16 können insbesondere als in den ersten Kühlkanälen 10 angeordnete Rohre ausgebildet sein. Derartige Ausgestaltungen werden nachfolgend in Verbindung mit den FIG 7 bis 9 näher erläutert.

Gemäß den FIG 7 und 8 können die Rohre 16 beispielsweise einen ersten und einen zweiten Rohrabschnitt 17, 18 aufweisen. Der erste und der zweite Rohrabschnitt 17, 18 sind in Fließrichtung des flüssigen Kühlmediums 11 gesehen hintereinander angeordnet. Gemäß FIG 7 verläuft der erste Rohrabschnitt 17 axial, also parallel zur Rotationsachse 7. Der zweite Rohrabschnitt 18 verläuft in diesem Fall spiralförmig um den ersten Rohrabschnitt 17 herum. Gemäß der alternativen Ausgestaltung von FIG 8 laufen beide Rohrabschnitte 17, 18 - also sowohl der erste Rohrabschnitt 17 als auch der zweite Rohrabschnitt 18 - doppelhelixartig um eine Kanalachse 19 um. Die Kanalachse 19 verläuft parallel zur Rotationsachse 7.

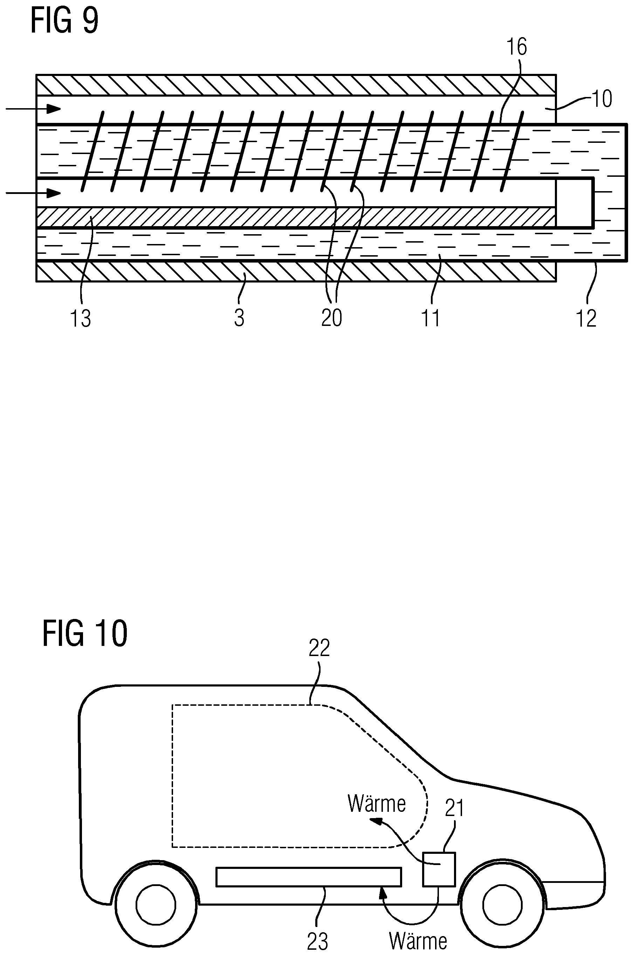

FIG 9 zeigt eine weitere, zu den Ausgestaltungen der FIG 7 und 8 alternative mögliche Ausgestaltung der Rohre 16. Gemäß FIG 9 verlaufen die Rohre 16 axial, also parallel zur Rotationsachse 7. An den Rohren 16 sind Luftleitelemente 20 angeordnet. Die Luftleitelemente 20 definieren eine helixartig um die Rohre 16 umlaufende Bahn für die Luft des inneren Luftkühlkreislaufs. Die Luft des inneren Luftkühlkreislaufs läuft dadurch spiralförmig um die in den ersten Kühlkanälen 10 angeordneten Rohre 16 um.

Die erfindungsgemäße elektrische Maschine ist prinzipiell beliebig ausgestaltbar, beispielsweise als Synchronmaschine oder als Asynchronmaschine oder als Gleichstrommaschine. Insbesondere eine Ausgestaltung als elektrische Asynchronmaschine ist jedoch bevorzugt. Weiterhin ist die erfindungsgemäße elektrische Maschine prinzipiell beliebig einsetzbar. Gemäß FIG 10 ist jedoch bevorzugt, die elektrische Maschine als Hauptantrieb 21 eines Kraftfahrzeugs zu verwenden. Diese Aussage gilt insbesondere (wenn auch nicht ausschließlich) in dem Fall, dass die elektrische Maschine als Asynchronmaschine ausgebildet ist.

In dem Falle der Verwendung als Hauptantrieb eines Kraftfahrzeugs weist die Statoreinrichtung 1 in der Regel nicht nur den Stator 2, sondern auch das Gehäuse 3 auf. In diesem Fall kann das aus dem Gehäuse 3 abgeführte (erwärmte) flüssige Kühlmedium 11 insbesondere innerhalb des Kraftfahrzeugs für Heizzwecke verwendet werden. Beispielsweise kann das flüssige Kühlmedium 11 dazu verwendet werden, einen Fahrgastraum 22 des Kraftfahrzeugs zu beheizen. Alternativ oder zusätzlich kann das flüssige Kühlmedium 11 dazu verwendet werden, einen elektrischen Energiespeicher 23 des Kraftfahrzeugs aufzuheizen. Aus dem elektrischen Energiespeicher 13 wird die erfindungsgemäße elektrische Maschine mit elektrischer Energie versorgt. Gegebenenfalls kann - beispielsweise beim Bremsen des Kraftfahrzeugs - auch elektrische Energie in den Energiespeicher 23 rückgespeist werden.

Die vorliegende Erfindung weist viele Vorteile auf. Insbesondere kann der Rotorinnenraum 9 der erfindungsgemäßen elektrischen Maschine auf effiziente Weise gekühlt werden. Weiterhin ist in erheblichem Umfang eine Wärmerückgewinnung möglich. Bei Verwendung in einem Kraftfahrzeug kann - insbesondere im Winter - ein Beheizen des Energiespeichers 23 und/oder des Fahrgastraums 22 erfolgen.

## Patentansprüche

1. Elektrische Maschine,
- wobei die elektrische Maschine eine Statoreinrichtung (1) und einen Rotor (4) aufweist,
- wobei der Rotor (4) drehfest auf einer Rotorwelle (5) angeordnet ist,
- wobei die Rotorwelle (5) in Lagern (6) der elektrischen Maschine gelagert ist, so dass die Rotorwelle (5) einschließlich des Rotors (4) um eine Rotationsachse (7) drehbar ist,
- wobei auf die Statoreinrichtung (1) axial beidseits Begrenzungselemente (8) aufgesetzt sind, so dass die Statoreinrichtung (1) und die Begrenzungselemente (8) einen Rotorinnenraum (9) radial außen und axial beidseits begrenzen,
- wobei in der Statoreinrichtung (1) axial verlaufende erste Kühlkanäle (10) angeordnet sind, die an ihren axialen Enden mit dem Rotorinnenraum (9) kommunizierend verbunden sind, so dass mittels der ersten Kühlkanäle (10) ein innerer Luftkühlkreislauf vom Rotorinnenraum (9) durch die ersten Kühlkanäle (10) hindurch in den Rotorinnenraum (9) zurück vervollständigt wird,
- wobei der Statoreinrichtung (1) ein flüssiges Kühlmedium (11) zugeführt und sodann wieder aus der Statoreinrichtung (1) abgeführt wird,
- wobei das flüssige Kühlmedium (11) zumindest teilweise durch in der Statoreinrichtung (1) angeordnete zweite Kühlkanäle (12) geführt wird,
- wobei die ersten Kühlkanäle (10) und die zweiten Kühlkanäle (12) durch Zwischenwände (13) der Statoreinrichtung (1) voneinander getrennt sind und die Zwischenwände (13) an ihren den ersten Kühlkanälen (10) zugewandten Seiten kühlrippenartige Primärvorsprünge (14) aufweisen , **dadurch gekennzeichnet**
- **dass** die Primärvorsprünge (14) ihrerseits an ihren den ersten Kühlkanälen (10) zugewandten Seiten kühlrippenartige Sekundärvorsprünge (15) aufweisen.

2. Elektrische Maschine nach Anspruch 1, wobei die kühlrippenartigen Primärvorsprünge (14) innen hohl ausgebildet sind und von dem flüssigen Kühlmedium (11) durchflossen sind.

3. Elektrische Maschine nach Anspruch 2, wobei die von dem flüssigen Kühlmedium (11) durchflossenen Teile der Primärvorsprünge (14) Bestandteile der zweiten Kühlkanäle (12) sind.

4. Elektrische Maschine nach einem der obigen Ansprüche, wobei in den ersten Kühlkanälen (10) dritte Kühlkanäle (16) angeordnet sind, die sich zumindest im Wesentlichen über die gesamte axiale Länge der ersten Kühlkanäle (10) erstrecken, und wobei das flüssige Kühlmedium (11) auch durch die dritten Kühlkanäle (16) geführt wird.

5. Elektrische Maschine nach einem der obigen Ansprüche, wobei die zweiten und die dritten Kühlkanäle (12,16) in Bezug auf den Fluss des flüssigen Kühlmediums (11) voneinander verschiedene Kühlkanäle (12,16) sind.

6. Elektrische Maschine nach Anspruch 5, wobei die zweiten und die dritten Kühlkanäle (12,16) in Bezug auf den Fluss des flüssigen Kühlmediums (11) einander parallel oder in Serie zueinander angeordnet sind.

7. Elektrische Maschine nach einem der obigen Ansprüche, wobei die dritten Kühlkanäle (16) als in den ersten Kühlkanälen (10) angeordnete Rohre ausgebildet sind.

8. Elektrische Maschine nach Anspruch 7, wobei die in den ersten Kühlkanälen (10) angeordneten Rohre (16) einen ersten und einen zweiten Rohrabschnitt (17,18) aufweisen, die in Fließrichtung des flüssigen Kühlmediums (11) gesehen hintereinander angeordnet sind, wobei der erste Rohrabschnitt (17) axial verläuft und wobei der zweite Rohrabschnitt (18) spiralförmig um den ersten Rohrabschnitt (17) herum verläuft.

9. Elektrische Maschine nach Anspruch 7, wobei die in den ersten Kühlkanälen (10) angeordneten Rohre (16) einen ersten und einen zweiten Rohrabschnitt (17,18) aufweisen, die in Fließrichtung des flüssigen Kühlmediums (11) gesehen hintereinander angeordnet sind, und wobei der erste und der zweite Rohrabschnitt (17,18) doppelhelixartig um eine zur Rotationsachse (7) parallele Kanalachse (19) umlaufen.

10. Elektrische Maschine nach Anspruch 7, wobei die in den ersten Kühlkanälen (10) angeordneten Rohre (16) axial verlaufen und wobei an den Rohren (16) Luftleitelemente (20) angeordnet sind, so dass die Luft des inneren Luftkühlkreislaufes spiralförmig um die in den ersten Kühlkanälen (10) angeordneten Rohre (16) umläuft.

11. Elektrische Maschine nach einem der obigen Ansprüche, wobei die Statoreinrichtung (1) einen Stator (2) und ein Gehäuse (3) aufweist und wobei das Gehäuse (3) den Stator (2) radial außen umgibt.

12. Elektrische Maschine nach Anspruch 11, die als Hauptantrieb (21) eines Kraftfahrzeugs verwendet wird.

13. Elektrische Maschine nach Anspruch 12,bei der das aus dem Gehäuse (3) abgeführte flüssige Kühlmedium (11) innerhalb des Kraftfahrzeugs für Heizzwecke verwendet wird.

14. Elektrische Maschine nach Anspruch 13, bei der das aus dem Gehäuse (3) abgeführte flüssige Kühlmedium (11) zum Aufheizen eines elektrischen Energiespeichers (23) des Kraftfahrzeugs und/oder zum Beheizen eines Fahrgastraums des Kraftfahrzeugs verwendet wird.

## Claims

1. Electric machine,
- wherein the electric machine has a stator device (1) and a rotor (4),
- wherein the rotor (4) is arranged in a rotationally fixed manner on a rotor shaft (5),
- wherein the rotor shaft (5) is mounted in bearings (6) of the electric machine so that the rotor shaft (5) including the rotor (4) can be rotated around a rotational axis (7),
- wherein limiting elements (8) are mounted on the stator device (1) axially on both sides so that the stator device (1) and limiting elements (8) bound an internal rotor space (9) radially externally and axially on both sides,
- wherein axially extending first cooling channels (10) are arranged in the stator device (1) which at their axial ends are connected in a communicating manner to the internal rotor space (9) so that by means of the first cooling channels (10) an internal air-cooling circuit will be completed from the internal rotor space (9) through the first cooling channels (10) and back into the internal rotor space (9),
- wherein a liquid cooling medium (11) is ducted to the stator device (1) and then ducted out of the stator device (1) again,
- wherein the liquid cooling medium (11) is ducted at least partially through second cooling channels (12) arranged in the stator device (1),
- wherein the first cooling channels (10) and the second cooling channels (12) are separated from one another by partitions (13) of the stator device (1) and the partitions (13) have cooling-fin-like primary projections (14) on their sides facing the first cooling channels (10), **characterised in that**
- the primary projections (14) in turn have cooling-fin-like secondary projections (15) on their sides facing the first cooling channels (10).

2. Electric machine according to claim 1, wherein the cooling-fin-like primary projections (14) are embodied as hollow inside and the liquid cooling medium (11) flows through them.

3. Electric machine according to claim 2, wherein the parts of the primary projections (14) through which the liquid cooling medium (11) flows are constituent parts of the second cooling channels (12).

4. Electric machine according to one of the above claims, wherein arranged in the first cooling channels (10) are third cooling channels (16) that extend at least substantially along the entire axial length of the first cooling channels (10), and wherein the liquid cooling medium (11) is ducted also through the third cooling channels (16).

5. Electric machine according to one of the above claims, wherein the second and the third cooling channels (12, 16) are cooling channels (12, 16) that are different from one another in terms of the flow of the liquid cooling medium (11).

6. Electric machine according to claim 5, wherein the second and third cooling channels (12, 16) are arranged parallel to one another or in series with one another in terms of the flow of the liquid cooling medium (11).

7. Electric machine according to one of the above claims, wherein the third cooling channels (16) are embodied as pipes arranged in the first cooling channels (10).

8. Electric machine according to claim 7, wherein the pipes (16) arranged in the first cooling channels (10) have a first and a second pipe section (17, 18) arranged one behind the other as viewed in the direction of flow of the liquid cooling medium (11), wherein the first pipe section (17) extends axially, and wherein the second pipe section (18) extends spirally around the first pipe section (17).

9. Electric machine according to claim 7, wherein the pipes (16) arranged in the first cooling channels (10) have a first and a second pipe section (17, 18) arranged one behind the other as viewed in the direction of flow of the liquid cooling medium (11), and wherein the first and second pipe section (17, 18) run like a double helix around a channel axis (19) parallel to the rotational axis (7).

10. Electric machine according to claim 7, wherein the pipes (16) arranged in the first cooling channels (10) extend axially and wherein air-ducting elements (20) are arranged on the pipes (16) so that the air of the internal air-cooling circuit circulates spirally around the pipes (16) arranged in the first cooling channels (10).

11. Electric machine according to one of the above claims, wherein the stator device (1) has a stator (2) and a housing (3) and wherein the housing (3) surrounds the stator (2) radially externally.

12. Electric machine according to claim 11, which is used as a main drive (21) of a motor vehicle.

13. Electric machine according to claim 12, in which the liquid cooling medium (11) ducted out of the housing (3) is used inside the motor vehicle for heating purposes.

14. Electric machine according to claim 13, wherein the liquid cooling medium (11) ducted out of the housing (3) is used for heating up an electric energy store (23) belonging to the motor vehicle and/or for heating a passenger compartment of the motor vehicle.

## Revendications

1. Machine électrique,
- dans laquelle la machine électrique a un dispositif (1) statorique et un rotor (4),
- dans laquelle le rotor (4) est solidaire en rotation d'un arbre (5) de rotor,
- dans laquelle l'arbre (5) du rotor est monté dans des paliers (6) de la machine électrique, de manière à ce que l'arbre (5) du rotor, y compris le rotor (4), puisse tourner autour d'un axe (7) de rotation,
- dans laquelle des éléments (8) de limitation sont mis des deux côtés axialement sur le dispositif (1) statorique, de manière à ce que le dispositif (1) statorique et les éléments (8) de limitation délimitent, vers l'extérieur radialement et des deux côtés axialement, un espace (9) intérieur de rotor,
- dans laquelle, dans le dispositif (1) statorique sont disposés des premiers canaux (10), qui s'étendent axialement et qui communiquent à leurs extrémités axiales avec l'espace (9) intérieur du rotor, de manière à compléter, au moyen des premiers canaux (10) de refroidissement, un circuit intérieur de refroidissement par de l'air, partant de l'espace (9) intérieur du rotor et revenant à l'espace (9) intérieur du rotor en passant par les premiers canaux (10) de refroidissement,
- dans laquelle il est envoyé un fluide (11) liquide de refroidissement au dispositif (1) statorique, qui est évacué ensuite à nouveau du dispositif (1) statorique,
- dans laquelle le fluide (11) liquide de refroidissement passe, au moins en partie, par des deuxièmes canaux (12) de refroidissement disposés dans le dispositif (1) statorique,
- dans laquelle les premiers canaux (10) de refroidissement et les deuxièmes canaux (12) de refroidissement sont séparés les uns des autres par des parois (13) intermédiaires du dispositif (1) statorique et les parois (13) intermédiaires ont, sur leurs côtés tournés vers les premiers canaux (10) de refroidissement, des saillies (14) primaires de type en ailettes de refroidissement, **caractérisée**
- **en ce que** les saillies (14) primaires ont, pour leur part, des saillies (15) secondaires de type en ailettes de refroidissement sur leurs côtés tournés vers les premiers canaux (10) de refroidissement.

2. Machine électrique suivant la revendication 1,
dans laquelle les saillies (14) primaires de type en ailettes de refroidissement sont constituées en étant creuses à l'intérieur et sont parcourues par le fluide (11) liquide de refroidissement.

3. Machine électrique suivant la revendication 2,
dans laquelle des parties, parcourues par le fluide (11) liquide de refroidissement, des saillies (14) primaires sont des parties constitutives des deuxièmes canaux (12) de refroidissement.

4. Machine électrique suivant l'une des revendications précédentes,
dans laquelle, dans les premiers canaux (10) de refroidissement, sont disposés des troisièmes canaux (16) de refroidissement, qui s'étendent, au moins sensiblement, sur toute la longueur axiale des premiers canaux (10) de refroidissement et dans laquelle on fait passer le fluide (11) liquide de refroidissement également dans les troisièmes canaux (16) de refroidissement.

5. Machine électrique suivant l'une des revendications précédentes,
dans laquelle les deuxièmes et les troisièmes canaux (12, 16) de refroidissement sont, en ce qui concerne le flux du fluide (11) liquide de refroidissement, des canaux (12, 16) de refroidissement différents les uns des autres.

6. Machine électrique suivant la revendication 5,
dans laquelle les deuxièmes et les troisièmes canaux (12, 16) de refroidissement sont, en ce qui concerne le flux du fluide (11) liquide de refroidissement, disposés parallèlement les uns aux autres ou en série les uns avec les autres.

7. Machine électrique suivant l'une des revendications précédentes,
**caractérisé en ce que** les troisièmes canaux (16) de refroidissement sont constitués sous la forme de tubes dans les premiers canaux (10) de refroidissement.

8. Machine électrique suivant la revendication 7,
dans laquelle les tubes (16), disposés dans les premiers canaux (10) de refroidissement, comptent un premier et un deuxième tronçons (17, 18) de tubes, qui, considéré dans le sens d'écoulement du milieu (11) liquide de refroidissement, sont disposés les uns derrière les autres,
dans laquelle le premier tronçon (17) de tubes s'étend axialement,
et dans laquelle le deuxième tronçon (18) de tubes s'étend en forme de spirale autour du premier tronçon (17) de tubes.

9. Machine électrique suivant la revendication 7,
dans laquelle les tubes (16), disposés dans les premiers canaux (10) de refroidissement, ont un premier et un deuxième tronçons (17, 18) de tubes, qui, considéré dans le sens d'écoulement du fluide (11) liquide de refroidissement, sont disposés les uns derrière les autres,
dans lequel le premier et le deuxième tronçons (17, 18) de tubes tournent, en étant du type à double hélice, autour d'un axe (19) de canal parallèle à l'axe (7) de rotation.

10. Machine électrique suivant la revendication 7,
dans laquelle les tubes (16), disposés dans les premiers canaux (10) de refroidissement, s'étendent axialement et
dans laquelle, sur les tubes (16), sont montés des éléments (20) de conduite d'air, de manière à ce que l'air du circuit intérieur de refroidissement par de l'air tourne en forme de spirale autour des tubes (16), disposés dans les premiers canaux (10) de refroidissement.

11. Machine électrique suivant l'une des revendications précédente,
dans laquelle le dispositif (1) statorique a un stator (2) et une carcasse (3), la carcasse (3) entourant radialement le stator (2).

12. Machine électrique suivant la revendication 11,
qui est utilisée comme propulsion (21) principale d'un véhicule automobile.

13. Machine électrique suivant la revendication 12,
dans laquelle le fluide (11) liquide de refroidissement évacué de la carcasse (3) est utilisé à l'intérieur du véhicule automobile à des fins de chauffage.

14. Machine électrique suivant la revendication 13, dans laquelle le fluide (11) liquide de refroidissement évacué de la carcasse (3) est utilisé pour chauffer un accumulateur (23) d'énergie électrique du véhicule automobile et/ou pour réchauffer un espace réservé aux passagers du véhicule automobile.
